# EUROPEAN PATENT SPECIFICATION

(11) **EP 3 547 676 B1**
(45) Date of publication and mention of the grant of the patent: **06.01.2021**
(21) Application number: 17898227.8
(22) Date of filing: 07.11.2017
(51) Int. Cl.: H04N 7/18, B60R 1/00, B60R 11/04

(54) **VEHICLE DISPLAY CONTROL DEVICE, VEHICLE DISPLAY CONTROL SYSTEM, VEHICLE DISPLAY CONTROL METHOD, AND PROGRAM**
FAHRZEUGANZEIGESTEUERUNGSVORRICHTUNG, FAHRZEUGANZEIGESTEUERUNGSSYSTEM, FAHRZEUGANZEIGESTEUERUNGSVERFAHREN UND PROGRAMM
DISPOSITIF DE COMMANDE D'AFFICHAGE DE VÉHICULE, SYSTÈME DE COMMANDE D'AFFICHAGE DE VÉHICULE, PROCÉDÉ DE COMMANDE D'AFFICHAGE DE VÉHICULE ET PROGRAMME

(30) Priority: 27.02.2017 JP 2017035372
(43) Date of publication of application: 02.10.2019
(73) Proprietor: JVC Kenwood Corporation, Yokohama-shi, Kanagawa 221-0022 (JP)
(72) Inventor: YAMADA, Yasuo, Yokohama-shi Kanagawa 221-0022 (JP); MURATA, Toshitaka, Yokohama-shi Kanagawa 221-0022 (JP); HAYASHI, Keita, Yokohama-shi Kanagawa 221-0022 (JP)
(74) Representative: Carstens, Dirk Wilhelm
(86) International application number: PCT/JP2017/040160
(87) International publication number: WO 2018/154857

(56) References cited:
- JP-A- 2004 194 071
- JP-A- 2004 194 071
- JP-A- 2004 311 299
- JP-A- 2009 081 664
- US-A1- 2003 122 930
- US-A1- 2009 079 553
- US-A1- 2010 066 833
- US-B2- 8 144 033

## Description

### Field

The present invention relates to an on-vehicle display control device, an on-vehicle display control system, an on-vehicle display control method, and a non-transitory storage medium.

### Background

There is a known technology for displaying, on a side monitor in a vehicle, video images captured by a side camera instead of a conventional optical side mirror that is used to check lateral rearview. Similarly to the conventional optical side mirror, the side camera captures images in a rearview checking range including a side part of a vehicle body for a checking. In order to acquire the wider rearview checking range to be captured by the side camera, the side camera is sometimes placed apart from the side part of the vehicle body. The side camera is arranged so as to protrude with respect to the vehicle body and is placed in the vehicle body via a movable part that is movable with respect to the vehicle body. If the side camera is placed in the movable part in this way, the orientation of the side camera is changed due to an operation of the movable part and a imaging range is accordingly changed.

There is a known technology for making a role played by video images captured by a camera different in accordance with a folded or an unfolded state of a door mirror in which the camera is arranged (for example, see JP 2011-131678 A) .

US 2010 066833 A discloses a vehicle surroundings monitoring apparatus. JP 2004 194071 A discloses a driver support image generator.

### Technical Problem

As described above, the orientation of the side camera is changed due to the operation of the movable part and, thus, the imaging range is changed. A part of the rearview checking range is not sometimes captured by the side camera due to the change in the imaging range of the side camera.

Accordingly, the present invention has been conceived in light of the circumstances described above and an object thereof is to provide an on-vehicle display control device, an on-vehicle display control system, an on-vehicle display control method, and a program capable of appropriately checking around a vehicle.

### Solution to Problem

In accordance with the present invention, an on-vehicle display control device, an on-vehicle display control method, and a non-transitory storage medium as set forth in the appended claims is provided.

### Advantageous Effects of Invention

According to the present invention, an advantage is provided in that it is possible to appropriately check around a vehicle.

### Brief Description of Drawings

FIG. 1 is a schematic diagram illustrating a vehicle on which a display control system according to a first embodiment is mounted.
FIG. 2 is a schematic diagram illustrating a movable part of the vehicle, on which the display control system according to the first embodiment is mounted, when viewed from the rear.
FIG. 3 is a schematic diagram illustrating a folded state of the movable part of the vehicle, on which the display control system according to the first embodiment is mounted, when viewed from the rear.
FIG. 4 is a schematic diagram illustrating the movable part of the vehicle, on which the display control system according to the first embodiment is mounted, when viewed from a vehicle interior side.
FIG. 5 is a block diagram illustrating the display control system according to the first embodiment.
FIG. 6 is a schematic diagram illustrating a configuration example of a monitor of the display control system according to the first embodiment.
FIG. 7 is a schematic diagram illustrating the movable parts and cameras of the vehicle on which the display control system according to the first embodiment is mounted.
FIG. 8 is a flowchart illustrating a flow of processes performed in a display control device in the display control system according to the first embodiment.
FIG. 9 is a diagram illustrating an example of a video image generated in the display control system according to the first embodiment.
FIG. 10 is a schematic diagram illustrating the movable parts and the cameras of the vehicle on which the display control system according to the first embodiment is mounted.
FIG. 11 is a schematic diagram illustrating the movable parts and the cameras of the vehicle on which the display control system according to the first embodiment is mounted.
FIG. 12 is a diagram illustrating another example of a video image generated in the display control system according to the first embodiment.
FIG. 13 is a diagram illustrating another example of a video image generated in the display control system according to the first embodiment.
FIG. 14 is a diagram illustrating another example of a video image generated in the display control system according to the first embodiment.
FIG. 15 is a diagram illustrating another example of a video image generated in the display control system according to the first embodiment.
FIG. 16 is a schematic diagram illustrating movable parts and cameras of a vehicle on which the display control system according to a second embodiment is mounted.
FIG. 17 is a schematic diagram illustrating the movable parts and the cameras of the vehicle on which the display control system according to the second embodiment is mounted.
FIG. 18 is a diagram illustrating an example of a video image generated in the display control system according to the second embodiment.
FIG. 19 is a diagram illustrating another example of a video image generated in the display control system according to the second embodiment.
FIG. 20 is a diagram illustrating another example of a video image generated in the display control system according to the second embodiment.
FIG. 21 is a schematic diagram illustrating the movable parts and the cameras of the vehicle on which the display control system according to the second embodiment is mounted.
FIG. 22 is a schematic diagram illustrating movable parts and cameras of a vehicle on which the display control system according to a third embodiment is mounted.
FIG. 23 is a schematic diagram illustrating the movable parts and the cameras of the vehicle on which the display control system according to the third embodiment is mounted.
FIG. 24 is a schematic diagram illustrating another example of movable parts and cameras of the vehicle on which the display control system is mounted.

### Description of Embodiments

Preferred embodiments of a display control device (on-vehicle display control device) 40, a display control system (on-vehicle display control system) 1, a display control method (on-vehicle display control method), and a program according to the present invention will be explained with reference to accompanying drawings. Furthermore, the present invention is not limited to the embodiments described below.

### [First Embodiment]

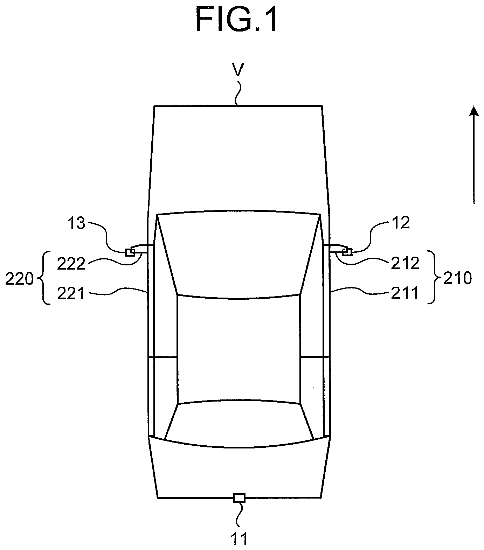

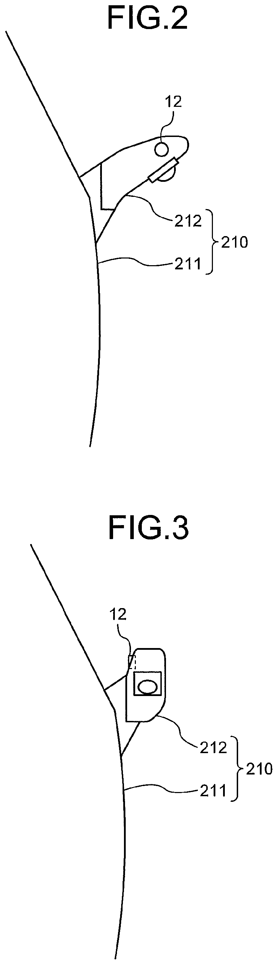

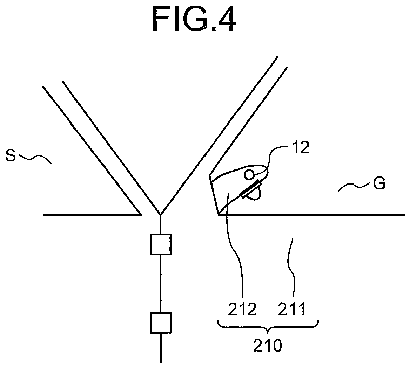

An outline of a vehicle V on which the display control system 1 is mounted will be described with reference to FIG. 1 to FIG. 4. FIG. 1 is a schematic diagram illustrating a vehicle on which a display control system according to a first embodiment is mounted. FIG. 2 is a schematic diagram illustrating a movable part of the vehicle, on which the display control system according to the first embodiment is mounted, when viewed from the rear. FIG. 3 is a schematic diagram illustrating a folded state of the movable part of the vehicle, on which the display control system according to the first embodiment is mounted, when viewed from the rear. FIG. 4 is a schematic diagram illustrating the movable part of the vehicle, on which the display control system according to the first embodiment is mounted, when viewed from a vehicle interior side and illustrating an example of a state in which a right door 211 is opened and a right supporting portion 212 is closed. The vehicle V includes, as a movable part 200 that is movable with respect to a side part of the vehicle V, a right movable part 210 including the right door (side part door) 211 and a right supporting portion (camera supporting portion) 212 arranged on the right door 211 and a left movable part 220 including a left door (side part door) 221 and a left supporting portion (camera supporting portion) 222 arranged on the left door 221. In a description below, the right movable part 210 and the left movable part 220 are referred to as the movable part 200 when they need not be distinguished from each other.

The right door 211 is arranged on a right side of the vehicle V in a traveling direction. The right door 211 can be opened and closed with respect to the vehicle body of the vehicle V. The right door 211 is opened with respect to the vehicle body when a driver is, for example, getting on or off the vehicle. The right door 211 may sometimes be opened with respect to the vehicle body in order to check a parking position. The right door 211 is closed with respect to the vehicle body when the vehicle V is running.

In the embodiment, the right door 211 is opened and closed such that degree of opening with respect to the vehicle body of the vehicle V is in a range between or equal to, for example, 0° and 60°. The right door 211 is stopped in an opened state at a second level or a third level by a cam mechanism of a hinge. In the embodiment, it is assumed that the right door 211 is stopped at the third level. For example, when the right door 211 is in a fully closed state, the degree of opening is 0°. For example, when the right door 211 is opened from the fully closed state and is stopped at a first level, the degree of opening is 20°. For example, when the right door 211 is in a fully opened state in which the right door 211 is stopped at the third level, the degree of opening is 60°.

The right door 211 includes a sensor (not illustrated) that detects open level information on the right door 211. The open level information on the right door 211 is an operation amount of the right door 211. The open level information on the right door 211 mentioned here is information indicating an open level of the right door 211 and is information on a position in which the right door 211 is stopped in an opened state at the second level or the third level. The sensor outputs the open level information on the right door 211 to a detecting unit 43 in a display control device 40 as operation information on the movable part 200.

The right supporting portion 212 supports a right side camera (side camera) 12. The right supporting portion 212 can be opened and closed with respect to the right door 211. As illustrated in FIG. 2, when the vehicle V is running, the right supporting portion 212 is opened with respect to the right door 211. As illustrated in FIG. 3 and FIG. 4, the right supporting portion 212 is closed with respect to the right door 211 when the vehicle V is parked.

In the embodiment, the right supporting portion 212 is opened and closed such that degree of opening with respect to the right door 211 is in a range between or equal to, for example, 0° and 80°. For example, when the right supporting portion 212 is in a fully closed state, the degree of opening is 0°. For example, when the right supporting portion 212 is in a fully opened state, the degree of opening is 80°. The right supporting portion 212 is movable with respect to the vehicle body of the vehicle V and the right door 211 even when the right door 211 is not operated to be opened or closed. The right supporting portion 212 is movable with respect to the vehicle body of the vehicle V in accordance with the right door 211 being opened or closed even when the right supporting portion 212 itself is not operated to be opened or closed.

The right supporting portion 212 includes a sensor (not illustrated) that detects degree of opening information on the right supporting portion 212. The degree of opening information on the right supporting portion 212 indicates an operation amount of the right supporting portion 212. The sensor outputs the degree of opening information on the right supporting portion 212 to the detecting unit 43 in the display control device 40 as the operation information on the movable part 200.

The right door 211 and the right supporting portion 212 configured in this way are movable, as the right movable part 210, with respect to the vehicle body of the vehicle V. The state in which the right door 211 is in the fully closed state with respect to the vehicle V and the right supporting portion 212 is in the fully opened state with respect to the right door 211 is referred to as a reference state of the right movable part 210. The right movable part 210 is in the reference state when the vehicle V is normally running.

The left door 221 is arranged on a left side of the vehicle V in the traveling direction. The left door 221 can be opened and closed with respect to the vehicle body of the vehicle V. The left door 221 is opened with respect to the vehicle body when a vehicle passenger at a passenger seat is getting on or off the vehicle. The left door 221 may sometimes be opened with respect to the vehicle body in order to check a parking position. The left door 221 is closed with respect to the vehicle body when the vehicle V is running.

In the embodiment, the left door 221 is opened and closed such that degree of opening with respect to the vehicle body of the vehicle V is in a range between or equal to, for example, 0° and 60°. The left door 221 is stopped in an opened state at the second level or the third level by the cam mechanism of the hinge. In the embodiment, it is assumed that the left door 221 is stopped at the third level. For example, when the left door 221 is in a fully closed state, the degree of opening is 0°. For example, when the left door 221 is opened from the fully closed state and is stopped at the first level, the degree of opening is 20°. For example, when the left door 221 is in a fully opened state in which the left door 221 is stopped at the third level, the degree of opening is 60°.

The left door 221 includes a sensor (not illustrated) that detects open level information on the left door 221. The open level information on the left door 221 is an operation amount of the left door 221. The open level information on the left door 221 mentioned here is information indicating an opened level of the left door 221 and is information on a position in which the left door 221 is stopped in an opened state at the second level or the third level. The sensor outputs the open level information on the left door 221 to the detecting unit 43 in the display control device 40 as the operation information on the movable part 200.

The left supporting portion 222 supports a left side camera (side camera) 13. The left supporting portion 222 can be opened and closed with respect to the left door 221. The left supporting portion 222 is opened with respect to the left door 221 when the vehicle V is running. The left supporting portion 222 is closed with respect to the left door 221 when the vehicle V is parked.

In the embodiment, the left supporting portion 222 is opened and closed such that the degree of opening with respect to the left door 221 is in a range between or equal to, for example, 0° and 80°. For example, when the left supporting portion 222 is in a fully closed state, the degree of opening is 0°. For example, when the left supporting portion 222 is in a fully opened state, the degree of opening is 80°. The left supporting portion 222 is movable with respect to the vehicle body of the vehicle V and the left door 221 even when the left door 221 is not operated to be opened or closed. The left supporting portion 222 is movable with respect to the vehicle body of the vehicle V in accordance with the left door 221 being opened or closed even when the left supporting portion 222 itself is not operated to be opened or closed.

The left supporting portion 222 includes a sensor (not illustrated) that detects degree of opening information on the left supporting portion 222. The degree of opening information on the left supporting portion 222 indicates an operation amount of the left supporting portion 222. The sensor outputs the degree of opening information on the left supporting portion 222 to the detecting unit 43 in the display control device 40 as the operation information on the movable part 200.

The left door 221 and the left supporting portion 222 configured in this way are movable, as the left movable part 220, with respect to the vehicle body of the vehicle V. The state in which the left door 221 is in a fully closed state with respect to the vehicle V and the left supporting portion 222 is in a fully opened state with respect to the left door 221 is referred to as a reference state of the left movable part 220. The left movable part 220 is in the reference state when the vehicle V is normally running. The open/close operation of opening or closing the right supporting portion 212 and the left supporting portion 222 may also be performed by a user, such as a driver, or, alternatively, the right supporting portion 212 and the left supporting portion 222 may also be opened or closed based on an operation state, such as an off state of ignition, of the vehicle V.

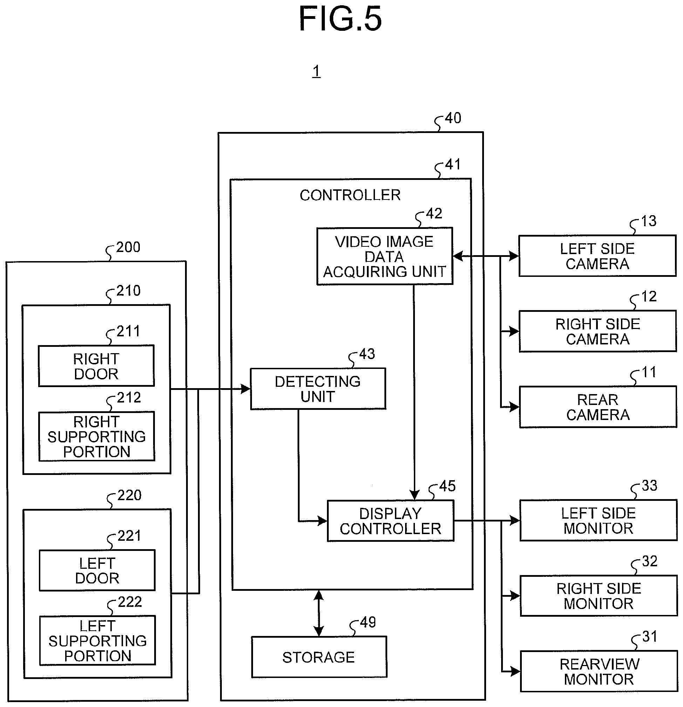

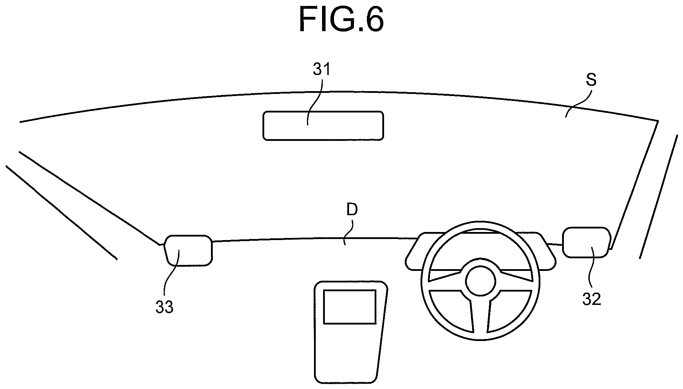

The display control system 1 will be described with reference to FIG. 5 and FIG. 6. FIG. 5 is a block diagram illustrating the display control system according to the first embodiment. FIG. 6 is a schematic diagram illustrating a configuration example of monitors of the display control system according to the first embodiment. The display control system 1 generates a video image that is to be displayed on a right side monitor (display) 32 and a left side monitor (display) 33. The display control device 40 and the display control system 1 are mounted on the vehicle V. The display control device 40 and the display control system 1 may also be, in addition to the devices mounted on the vehicle V, devices that are portable and can be used in the vehicle V.

The display control system 1 includes a rear camera 11, the right side camera 12, the left side camera 13, a rearview monitor 31, the right side monitor 32, the left side monitor 33, and the display control device 40.

The rear camera 11 is arranged at a rear of the vehicle V and captures a video image of an area centering a rear view of the vehicle V. In the embodiment, the rear camera 11 includes an effective view angle A11 of equal to or greater than, for example, 140°. The rear camera 11 outputs rear video image data on the captured video image to a video image data acquiring unit 42 in the display control device 40.

The right side camera 12 is arranged on the right side of the vehicle V and captures a video image of an area centering the right rear view of the vehicle V. The right side camera 12 captures a right rear video image (first video image) displayed on the right side monitor 32. The right side camera 12 is arranged in the right movable part 210. In the embodiment, the right side camera 12 is attached and fixed to the right supporting portion 212. The right side camera 12 may also be attached to the right door 211. In the right side camera 12, an imaging direction with respect to the vehicle body of the vehicle V is changed in accordance with the operation of the right movable part 210. The right side camera 12 outputs the captured right rear video image data to the video image data acquiring unit 42 in the display control device 40.

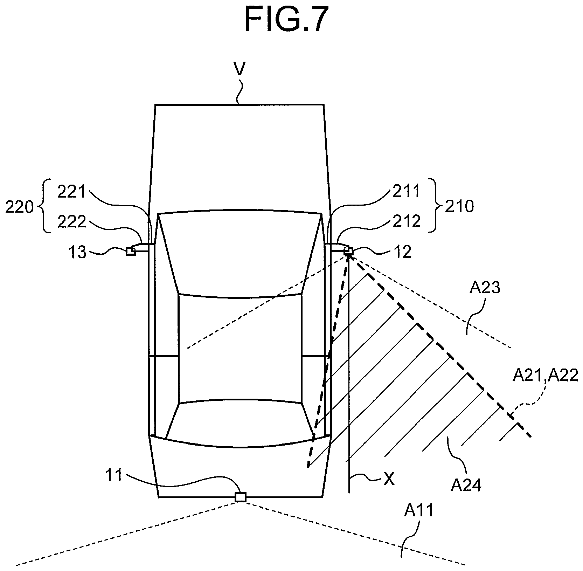

A view angle or the like of the right side camera 12 will be described with reference to FIG. 7. FIG. 7 is a schematic diagram illustrating the movable parts and the cameras of the vehicle on which the display control system according to the first embodiment is mounted. When the right movable part 210 is in the reference state, the right side camera 12 captures a range that includes a rearview checking range A21 that corresponds to a range of the right rear view of the vehicle V. The rearview checking range A21 captured by the right side camera 12 is substantially the same range as that acquired by a conventional optical right side mirror. When the right movable part 210 is in the reference state, the right side camera 12 can capture a predetermined imaging range defined by the rearview checking range A21. In the embodiment, the predetermined imaging range is the same range as the rearview checking range A21 and is referred to as a first imaging range A22. The right side camera 12 has an effective view angle A23 including an entire range of the first imaging range A22 when the right movable part 210 is in the reference state. In the embodiment, the effective view angle A23 of the right side camera 12 is, for example, equal to or greater than 120°. The right rear video image data captured by the right side camera 12 is clipped as a first clipping range A24 by a display controller 45 in the display control device 40.

The left side camera 13 is arranged on the left side of the vehicle V and captures a video image of an area centering the left rear view of the vehicle V. The left side camera 13 captures a left rear video image (first video image) displayed on a left side monitor 33. The left side camera 13 is arranged in the left movable part 220. In the embodiment, the left side camera 13 is attached and fixed to the left supporting portion 222. The left side camera 13 may also be attached to the left door 221. In the left side camera 13, the imaging direction with respect to the vehicle body of the vehicle V is changed in accordance with the operation of the left movable part 220. The left side camera 13 outputs the captured left rear video image data to the video image data acquiring unit 42 in the display control device 40.

A view angle or the like of the left side camera 13 will be described. When the left movable part 220 is in the reference state, the left side camera 13 captures a rearview checking range that corresponds to a range of the left rear view of the vehicle V. The rearview checking range captured by the left side camera 13 is substantially the same range as that acquired by a conventional optical left side mirror. When the left movable part 220 is in the reference state, the left side camera 13 can capture a predetermined imaging range defined by the rearview checking range. In the embodiment, the predetermined imaging range is the same range as the rearview checking range and is referred to as the first imaging range. In the embodiment, the effective view angle of the left side camera 13 is, for example, equal to or greater than 120°. The left rear video image captured by the left side camera 13 is clipped as the first clipping range by the display controller 45 in the display control device 40.

The right side camera 12 and the left side camera 13 are referred to as a side camera when they need not be distinguished from each other. The right rear video image and the left rear video image are referred to as a side rear video image when they need not be distinguished from each other.

The rearview monitor 31 is, as an example, an electronic rearview mirror. When the rearview monitor 31 is used as an electronic rearview mirror, it does not matter whether or not a half mirror is present for checking a rearward with optical reflection. The rearview monitor 31 is a display including, for example, a liquid crystal display (LCD) or an organic EL (Organic ElectroLuminescence) display.

The rearview monitor 31 is arranged at a position that is easily and visually checked by the driver. In the embodiment, as illustrated in FIG. 6, the rearview monitor 31 is arranged in front of the driver of the vehicle V and in an upper part of a center in a vehicle width direction of a windshield S. The rearview monitor 31 may also be arranged in the upper part of the center in the vehicle width direction of a dashboard D.

The rearview monitor 31 displays, based on video image signal output from the display controller 45 in the display control device 40, a rear view video image of the vehicle V. A first display image that has been clipped in the same range as a range visually checked by the conventional optical rearview mirror is displayed on the rearview monitor 31.

The right side monitor 32 is a display including, for example, a liquid crystal display or an organic EL display.

The right side monitor 32 is arranged at a position that is easily and visually checked by the driver. In the embodiment, as illustrated in FIG. 6, the right side monitor 32 is arranged in front of the driver of the vehicle V and on a right side of the dashboard D in the vehicle width direction. The right side monitor 32 displays, based on the video image signal output from the display controller 45 in the display control device 40, a right rear display image of the vehicle V. A right side rearview video image (hereinafter, referred to as a "second display image") 100 that images the same range as the rearview checking range A21 is displayed on the right side monitor 32.

The left side monitor 33 is a display including, for example, a liquid crystal display or an organic EL display.

The left side monitor 33 is arranged at a position that is easily and visually checked by the driver. In the embodiment, as illustrated in FIG. 6, the left side monitor 33 is arranged in front of the driver of the vehicle V and on a left side of the dashboard D in the vehicle width direction. The left side monitor 33 displays, based on the video image signal output from the display controller 45 in the display control device 40, a left rear video image of the vehicle V. A left rear display image (hereinafter, referred to as the "second display image") that has been clipped in the same range as the rearview checking range is displayed on the left side monitor 33.

The right side monitor 32 and the left side monitor 33 are referred to as a side monitor when they need not be distinguished from each other.

The display control device 40 includes a controller 41 and a storage 49.

The controller 41 is an arithmetic processing device configured by, for example, a central processing unit (CPU) or the like. The controller 41 loads programs stored in the storage 49 into a memory and executes commands included in the programs. The controller 41 includes the video image data acquiring unit 42, the detecting unit 43, and the display controller 45.

The video image data acquiring unit 42 acquires video image data of areas around the vehicle. More specifically, the video image data acquiring unit 42 acquires the rear video image data indicating the rear video image (the second video image) output by the rear camera 11, the right rear video image data (side rear video image data) indicating the right rear video image output by the right side camera 12, and the left rear video image data (side rear video image data) indicating the left rear video image output by the left side camera 13. The video image data acquiring unit 42 outputs the acquired video image data of areas to the display controller 45.

The detecting unit 43 acquires, from each of the sensors arranged in the movable part 200, as the operation information on the movable part 200, the open level information on the right door 211 and the left door 221 and the degree of opening information on the right supporting portion 212 and the left supporting portion 222.

The display controller 45 generates a video image and displays the video image on the side monitor. More specifically, the display controller 45 generates a second display image 100 and displays the second display image on the right side monitor 32. The display controller 45 generates the second display image and displays the second display image on the left side monitor 33.

A function for generating the second display image 100 and displaying the second display image in the right side monitor 32 by the display controller 45 will be described.

When the right movable part 210 is in the reference state, the display controller 45 generates the second display image 100 by clipping the right rear video image acquired by the video image data acquiring unit 42 so as to include the first imaging range A22 and then displays the second display image in the right side monitor 32.

When the right movable part 210 is operated and the right side camera 12 faces a direction in which the right side camera 12 is not able to capture the first imaging range A22, the display controller 45 generates the second display image 100 from at least one of the right rear video image and the rear video image acquired by the video image data acquiring unit 42 and then displays the second display image on the right side monitor 32.

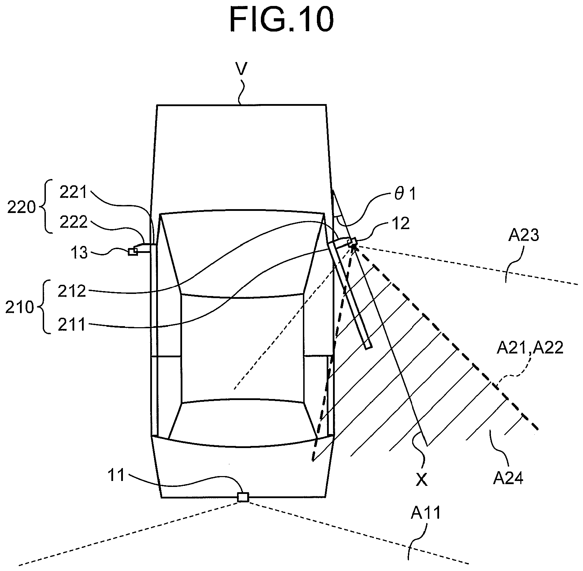

The direction in which the right side camera 12 is not able to capture the first imaging range A22 is a direction in which an optical axis X (see FIG. 10) of the right side camera 12 faces the direction in which the first imaging range A22 is not able to be captured. The direction in which the first imaging range A22 is not able to be captured may also be a direction in which a part of the first imaging range A22 is not able to be captured. In other words, the case above is a case in which a part of the first imaging range A22 is outside the range of the effective view angle A23 of the right side camera 12.

The direction of the optical axis X of the right side camera 12 is changed in accordance with the operation amount of the right movable part 210. In the embodiment, the direction of the optical axis X of the right side camera 12 is represented by an angle θ1 (hereinafter, referred to as a "first angle") (see FIG. 10) of the optical axis X of the right side camera 12 with respect to the right side portion of the vehicle V. When the right movable part 210 is in the reference state, the first angle θ1 is 0°. It is assumed that, regarding the first angle θ1, a direction in which the right door 211 is opened from the position of the right movable part 210 that is in the reference state is defined as a positive direction, whereas a direction in which the right supporting portion 212 is closed is defined as a negative direction. The first angle θ1 is calculated based on the open level information on the right door 211 and the degree of opening information on the right supporting portion 212 that are acquired by the detecting unit 43.

If the first angle θ1 is in a predetermined range, the first angle θ1 faces the direction in which the first imaging range A22 can be captured. The predetermined range is adjusted when the display control device 40 is set up and is previously stored. In the embodiment, if the first angle θ1 is in the range between or equal to, for example, -10° and 50°, the first angle θ1 faces the direction in which the first imaging range A22 can be captured. If the first angle θ1 is in the range, for example, less than -10° or greater than 50°, the first angle θ1 does not face the direction in which the first imaging range A22 can be captured.

Based on whether the first angle θ1 that indicates the direction of the optical axis X of the right side camera 12 faces the direction in which the first imaging range A22 can be captured, the display controller 45 generates the second display image 100 from at least one of the right rear video image data and the rear video image acquired by the video image data acquiring unit 42 and then displays the second display image on the right side monitor 32.

If it is determined that the direction of the optical axis X of the right side camera 12 is the direction in which the first imaging range A22 can be captured, the display controller 45 generates a first clipped video image 101 from the right rear video image by clipping the first clipping range A24 that is the same range as the first imaging range A22. The display controller 45 displays, on the right side monitor 32, the first clipped video image 101 as the second display image 100.

If it is determined that the direction of the optical axis X of the right side camera 12 is the direction in which the first imaging range A22 cannot be captured, the display controller 45 generates the second display image 100 from the rear video image in addition to the right rear video image and then displays the second display image on the right side monitor 32.

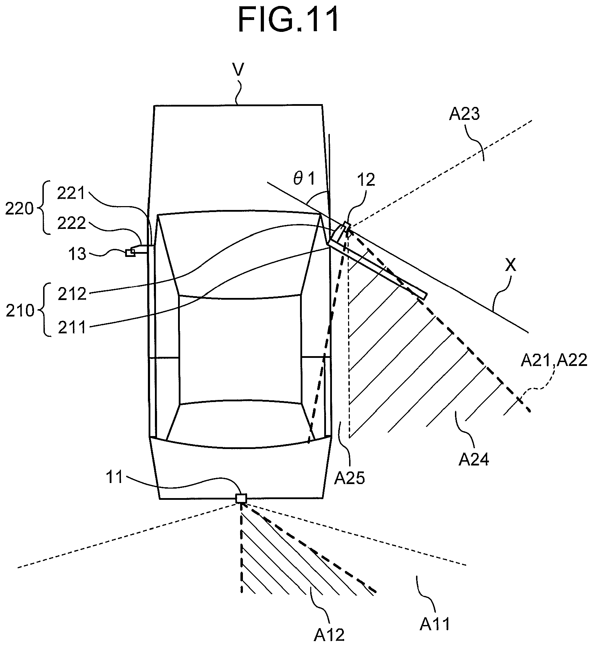

More specifically, if it is determined that the direction of the optical axis X of the right side camera 12 is the direction in which the first imaging range A22 cannot be captured, the display controller 45 generates the second display image 100 by combining the first clipped video image 101, which is obtained from the right rear video image by clipping the first clipping range A24 that is overlapped with a part of the first imaging range A22, and a second clipped video image 102, which is obtained from the rear video image data by clipping a second clipping range A12 that is overlapped range with a remaining part A25 (see FIG. 11) in the first imaging range A22. The display controller 45 displays the generated second display image 100 on the right side monitor 32. The first clipping range A24 is the maximum range corresponding to the range overlapped with the first imaging range A22. Consequently, the second display image 100 is generated by maximally using the right rear video image of the right side camera 12.

Alternatively, if it is determined that the direction of the optical axis X of the right side camera 12 is the direction in which the first imaging range A22 cannot be captured, the display controller 45 may also generate the second display image 100 by combining the first clipped video image 101, which is obtained from the right rear video image by clipping the first clipping range A24 that is overlapped with the area of the right half of the first imaging range A22, and the second clipped video image 102, which is obtained from the rear video image by clipping the second clipping range A12 that is the range overlapped with the remaining part A25 in the first imaging range A22. The display controller 45 displays the generated second display image 100 on the right side monitor 32.

Alternatively, if it is determined that the direction of the optical axis X of the right side camera 12 is the direction in which the first imaging range A22 cannot be captured, the display controller 45 may also generate the second display image 100 by combining the first clipped video image 101, which is obtained from the right rear video image by clipping the first clipping range A24 that is overlapped with a part of the first imaging range A22, and a monochrome video image 103, which corresponds to the remaining part A25 in the first imaging range A22, and then displays the generated second display image on the right side monitor 32.

Alternatively, if it is determined that the direction of the optical axis X of the right side camera 12 is the direction in which the first imaging range A22 cannot be captured, the display controller 45 may also generate, as the second display image 100, the second clipped video image 102, which is obtained from the rear video image by clipping the second clipping range A12 that is the range overlapped with the first imaging range A22, and then displays the generated second display image on the right side monitor 32.

In this way, in accordance with an operation status of the right supporting portion 212 and the right door 211 and based on whether the direction of the right side camera 12 faces the direction in which the first imaging range A22 can be captured, the display controller 45 generates the second display image 100 and displays the generated second display image on the right side monitor 32.

Regarding the video image to be displayed on the left side monitor 33, the display controller 45 similarly generates, based on the direction of the left side camera 13, the second display image from at least one of the left rear video image and the rear video image acquired by the video image data acquiring unit 42 and displays the generated second display image on the left side monitor 33.

In this way, in accordance with the operation status of the left supporting portion 222 and the left door 221 and based on whether the direction of the left side camera 13 faces the direction in which the first imaging range can be captured, the display controller 45 generates the second display image and displays the generated second display image on the left side monitor 33.

The storage 49 stores therein data needed for various processes performed in the display control device 40 and stores various processing results. The storage 49 is, for example, a semiconductor memory device, such as a random access memory (RAM), a read only memory (ROM), and a flash memory, or a storage device, such as a hard disk and an optical disk.

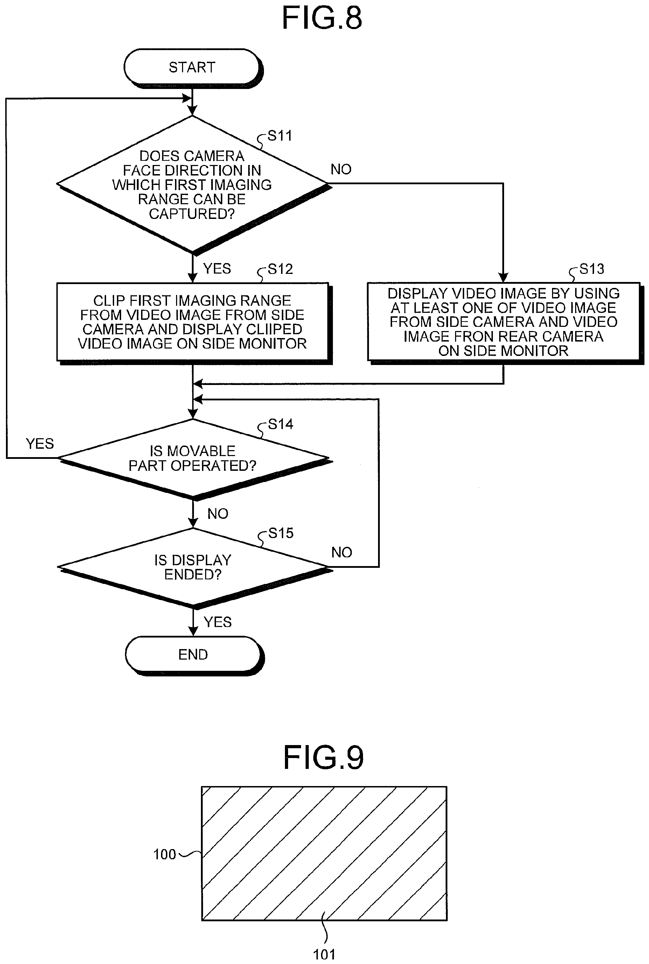

In the following, a flow of processes performed in the display control device 40 in the display control system 1 will be described with reference to FIG. 8. FIG. 8 is a flowchart illustrating the flow of processes performed in the display control device in the display control system according to the first embodiment.

The display control system 1 is started up when the vehicle V is moving. The video image data acquiring unit 42 in the display control device 40 acquires the rear video image from the rear camera 11, the right rear video image from the right side camera 12, and the left rear video image from the left side camera 13. In the following, a displaying process performed by the right side monitor 32 will be described. However, in also the displaying process performed by the left side monitor 33, the same process is also performed.

The controller 41 determines whether the direction of the camera faces the direction in which the first imaging range A22 can be captured (Step S11). More specifically, the controller 41 calculates the first angle θ1 based on the open level information on the right door 211 and the degree of opening information on the right supporting portion 212 acquired by the detecting unit 43. Then, the controller 41 determines whether the direction of the right side camera 12 is the direction in which the first imaging range A22 can be captured by determining whether the first angle θ1 is in the direction in which the first imaging range A22 can be captured.

If the controller 41 determines that the direction of the camera is the direction in which the first imaging range A22 can be captured (Yes at Step S11), the controller 41 proceeds to Step S12. If the controller 41 determines that the direction of the camera is the direction in which the first imaging range A22 cannot be captured (No at Step S11), the controller 41 proceeds to Step S13.

The controller 41 allows the display controller 45 to clip the first imaging range A22 and display the clipped range on the right side monitor 32 (Step S12). More specifically, the controller 41 allows the display controller 45 to generate, as the second display image 100, the first clipped video image 101 that is obtained from the right rear video image acquired by the video image data acquiring unit 42 by clipping the first clipping range A24 that is the entire range of the first imaging range A22. Then, the controller 41 allows the display controller 45 to display the generated second display image 100 on the right side monitor 32. The controller 41 proceeds to Step S14.

The controller 41 allows the display controller 45 to generate the second display image 100 by using at least one of the right rear video image and the rear video image, which is obtained from the rear camera 11, acquired by the video image data acquiring unit 42 and then display the generated second display image on the right side monitor 32 (Step S13). The controller 41 proceeds to Step S14.

More specifically, the controller 41 allows the display controller 45 to generate the second display image 100 by combining the first clipped video image 101, which is obtained from the right rear video image by clipping the first clipping range A24 that is overlapped with a part of the first imaging range A22, and the second clipped video image 102, which is obtained from the rear video image by clipping the second clipping range A12 that is the range overlapped with the remaining part A25 in the first imaging range A22. The controller 41 allows the display controller 45 to display the generated second display image 100 on the right side monitor 32.

Alternatively, the controller 41 may also allow the display controller 45 to generate the second display image 100 by combining the first clipped video image 101, which is obtained from the right rear video image by clipping the first clipping range A24 that is overlapped with the area of the right half of the first imaging range A22, and the second clipped video image 102, which is obtained from the rear video image by clipping the second clipping range A12 that is the range overlapped with remaining part A25 in the first imaging range A22. The display controller 45 displays the generated second display image 100 on the right side monitor 32.

Alternatively, the controller 41 may also allow the display controller 45 to display, on the right side monitor 32, the second display image 100 by combining the first clipped video image 101, which is obtained from the right rear video image by clipping the first clipping range A24 that is overlapped with a part of the first imaging range A22, and the monochrome video image 103 which corresponds to the remaining part A25 in the first imaging range A22.

Alternatively, the controller 41 may also allow the display controller 45 to generate, as the second display image 100, the second clipped video image 102 that is obtained from the rear video image by clipping the second clipping range A12 that is the range overlapped with the first imaging range A22 and display the generated second display image on the right side monitor 32.

The controller 41 determines whether the movable part 200 is operated (Step S14). More specifically, if the controller 41 determines, based on the operation information on the movable part 200 acquired by the detecting unit 43, that the movable part 200 is operated (Yes at Step S14), the controller 41 returns to Step S11. If the controller 41 determines, based on the operation information on the movable part 200 acquired by the detecting unit 43, that the movable part 200 is not operated (No at Step S14), the controller 41 proceeds to Step S15.

The controller 41 determines whether the display is to be ended (Step S15). More specifically, the controller 41 determines whether a condition for ending the display has been satisfied. For example, the condition for ending the display mentioned here is a predetermined elapsed time after an engine or the like of the vehicle V having been stopped. If the controller 41 determines to end the display (Yes at Step S15), the process ends. If the controller 41 determines not to end the display (No at Step S15), the process returns to Step S14.

In the following, a description will be given of the displaying process performed on the right side monitor 32 in a case where the right supporting portion 212 is in a fully opened state with respect to the right door 211 and the right door 211 is operated.

The reference state of the right movable part 210 when the right door 211 is closed with respect to the vehicle V will be described with reference to FIG. 7. In

FIG. 7, the optical axis X of the right side camera 12 is in the direction parallel with a longitudinal direction of the vehicle V. The effective view angle A23 includes the entire range of the first imaging range A22. At Step S11, the controller 41 calculates the first angle θ1 as 0° based on the operation information acquired by the detecting unit 43. Then, the controller 41 determines that the direction of the right side camera 12 in a case where the first angle θ1 is 0° is the direction in which the first imaging range A22 can be captured (Yes at Step S11). At Step S12, the controller 41 allows the display controller 45 to generate, as the second display image 100, the first clipped video image 101 that is obtained from the right rear video image by clipping the first clipping range A24 that is the entire range of the first imaging range A22. Then, the controller 41 allows the display controller 45 to display the second display image 100 illustrated in FIG. 9 on the right side monitor 32. FIG. 9 is a diagram illustrating an example of a video image generated in the display control system according to the first embodiment.

The second display image 100 illustrated in FIG. 9 is configured by only the first clipped video image 101.

The state in which the right door 211 is opened at an angle of 20° with respect to the vehicle V will be described with reference to FIG. 10. FIG. 10 is a schematic diagram illustrating the movable parts and the cameras of the vehicle on which the display control system according to the first embodiment is mounted. In FIG. 10, the optical axis X of the right side camera 12 is rotated, counterclockwise, with respect to the optical axis X at the reference state of the right movable part 210 illustrated in FIG. 7. The effective view angle A23 is rotated, counterclockwise, with respect to the first imaging range A22. In the effective view angle A23, a range closer to the vehicle V side than the right door 211 is captured through a side glass G (see FIG. 4). The effective view angle A23 includes the entire range of the first imaging range A22. At Step S11, the controller 41 calculates the first angle θ1 as 20° based on the operation information acquired by the detecting unit 43. Then, the controller 41 determines that the direction of the right side camera 12 in a case where the first angle θ1 is 20° is the direction in which the first imaging range A22 can be captured (Yes at Step S11). At Step S12, The controller 41 allows the display controller 45 to generate, as the second display image 100, the first clipped video image 101 that is obtained from the right rear video image by clipping the first clipping range A24 that is the entire range of the first imaging range A22 and display the generated second display image on the right side monitor 32. The second display image 100 is the same as that illustrated in FIG. 9.

The state in which the right door 211 is opened at an angle of 60° with respect to the vehicle V will be described with reference to FIG. 11. FIG. 11 is a schematic diagram illustrating the movable parts and the cameras of the vehicle on which the display control system according to the first embodiment is mounted. In FIG. 11, the optical axis X of the right side camera 12 is rotated, counterclockwise, with respect to the optical axis X illustrated in FIG. 10. The effective view angle A23 is rotated, counterclockwise, with respect to the first imaging range A22. In the effective view angle A23, the range closer to the vehicle V than the right door 211 is captured through the side glass G. The effective view angle A23 is overlapped with a part of the first imaging range A22. In other words, in the first imaging range A22, the remaining part A25 that is not overlapped with the effective view angle A23 is present. At Step S11, The controller 41 calculates the first angle θ1 as 60° based on the operation information acquired by the detecting unit 43. Then, the controller 41 determines that the direction of the right side camera 12 in a case where the first angle θ1 is 60° is not the direction in which the first imaging range A22 can be captured (No at Step S11). At Step S13, the controller 41 allows the display controller 45 to generate the second display image 100 from at least one of the right rear video image and the rear video image and display the generated second display image on the right side monitor 32.

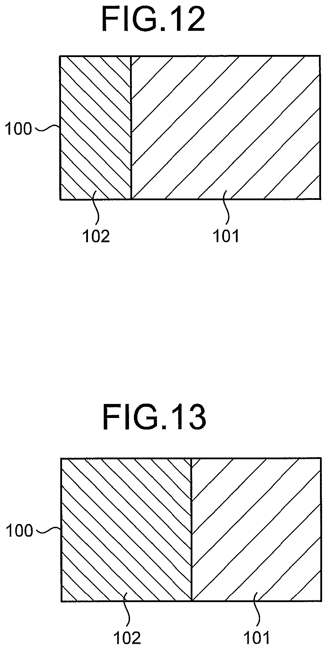

More specifically, at Step S13, the controller 41 allows the display controller 45 to generate the second display image 100 by combining the first clipped video image 101, which is obtained from the right rear video image by clipping the first clipping range A24 that is overlapped with a part of the first imaging range A22, and the second clipped video image 102, which is obtained from the rear video image by clipping the second clipping range A12 that is the range overlapped with the remaining part A25 in the first imaging range A22. The first clipping range A24 is the maximum range corresponding to the range overlapped with the first imaging range A22. The controller 41 allows the display controller 45 to display the second display image 100 illustrated in FIG. 12 on the right side monitor 32. FIG. 12 is a diagram illustrating another example of the video image generated in the display control system according to the first embodiment.

The second display image 100 illustrated in FIG. 12 is configured by the first clipped video image 101 and the second clipped video image 102. The area of the first clipped video image 101 is greater than the area of the second clipped video image 102.

Alternatively, the controller 41 may also allow the display controller 45 to generate the second display image 100 by combining the first clipped video image 101, which is obtained from the right rear video image by clipping the first clipping range A24 that is overlapped with the area of the right half of the first imaging range A22, and the second clipped video image 102, which is obtained from the rear video image by clipping the second clipping range A12 that is the range overlapped with the remaining part A25 in the first imaging range A22. The controller 41 allows the display controller 45 to display the second display image 100 illustrated in FIG. 13 on the right side monitor 32. FIG. 13 is a diagram illustrating another example of the video image generated in the display control system according to the first embodiment.

The second display image 100 illustrated in FIG. 13 is configured by the first clipped video image 101 and the second clipped video image 102. The area of the first clipped video image 101 is the same as the area of the second clipped video image 102.

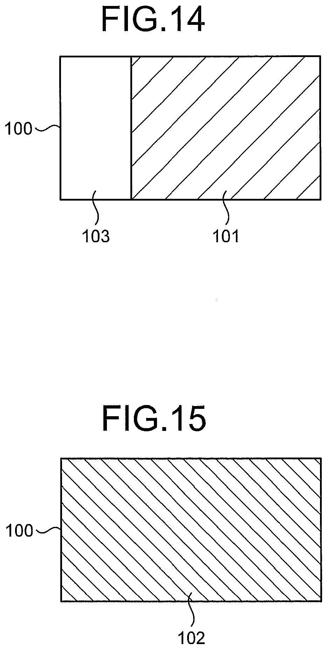

Alternatively, the controller 41 may also allow the display controller 45 to generate the second display image 100 by combining the first clipped video image 101, which is obtained from the right rear video image by clipping the first clipping range A24 that is overlapped with a part of the first imaging range A22, and the monochrome video image 103 which corresponds to the remaining part A25 in the first imaging range A22. It is preferable that the first clipping range A24 be the maximum range corresponding to the range overlapped with the first imaging range A22. The controller 41 allows the display controller 45 to display the second display image 100 illustrated in FIG. 14 on the right side monitor 32. FIG. 14 is a diagram illustrating another example of the video image generated in the display control system according to the first embodiment.

The second display image 100 illustrated in FIG. 14 is configured by the first clipped video image 101 and the monochrome video image 103. The area of the first clipped video image 101 is greater than the area of the monochrome video image 103.

Alternatively, the controller 41 may also allow the display controller 45 to generate, as the second display image 100, the second clipped video image 102 that is obtained from the rear video image by clipping the second clipping range A12 that is the range overlapped with the first imaging range A22. It is preferable that the second clipping range A12 be the maximum range corresponding to the range overlapped with the first imaging range A22. The controller 41 may also allow the display controller 45 to display the second display image 100 illustrated in FIG. 15 on the right side monitor 32. FIG. 15 is a diagram illustrating another example of the video image generated in the display control system according to the first embodiment.

The second display image 100 illustrated in FIG. 15 is configured by only the second clipped video image 102.

In this way, in accordance with the operation status of the movable part 200, the display control system 1 generates the second display image 100 and displays the generated second display image on the right side monitor 32.

As described above, the embodiment generates the second display image in accordance with the operation status of the movable part 200 and displays the generated second display image on the side monitor. If the direction of the side camera is the direction in which the first imaging range can be captured, the embodiment generates the second display image, which is obtained from the side rear video image by clipping a clipped view angle that is an entire range of the first imaging range, and displays the generated second display image on the side monitor. If the direction of the side camera is not the direction in which the first imaging range can be captured, the embodiment generates the second display image from at least one of the side rear video image and the rear video image and displays the generated second display image on the side monitor. Consequently, even when the right door 211 or the left door 221 is operated and the side camera faces the direction in which the first imaging range cannot be captured, the embodiment can generate an appropriate second display image and display the generated second display image on the side monitor. In this way, the embodiment can generate the appropriate second display image in accordance with the operation status of the movable part 200 and display the generated second display image on the side monitor.

The embodiment generates and displays the second display image by combining the first clipped video image, which is obtained from the side rear video image by clipping the first clipping range that is overlapped with a part of the first imaging range, and the second clipped video image, which is obtained from the rear video image by clipping the second clipping range that is the range overlapped with the remaining part in the first imaging range. Consequently, regarding the remaining part that is not captured by the side camera and that is included in the first imaging range, it is possible to generate and display the second display image by using the second clipped video image clipped from the rear video image. In this way, it is possible to reduce a lack of the video image in the rearview checking range and allow the area around the vehicle to be appropriately checked.

The embodiment may also generate and display the second display image by combining the first clipped video image, which is obtained from the side rear video image by clipping the first clipping range that is overlapped with the area of the half of the first imaging range, and the second clipped video image, which is obtained from the rear video image by clipping the second clipping range that is the range overlapped with the remaining part in the first imaging range. In this way, the embodiment can reduce the lack of the video image in the rearview checking range and allow the area around the vehicle to be appropriately checked. Furthermore, the display area of the first clipped video image and the display area of the second clipped video image become the same. Consequently, a driver can easily recognize the first clipped video image and the second clipped video image distinguishably.

The embodiment may also generate the second display image by combining the first clipped video image, which is obtained from the side rear video image by clipping the first clipping range that is overlapped with a part of the first imaging range, and the monochrome video image which corresponds to the remaining part in the first imaging range. Consequently, it is possible to avoid occurrence of discontinuity of objects to be captured on a joining surface formed by combining the first clipped video image and the second clipped video image. In this way, it is possible to appropriately check the area around the vehicle.

The embodiment may also generate, as the second display image, the second clipped video image that is obtained from the rear video image by clipping the second clipping range that is the range overlapped with the first imaging range. Consequently, even when the side camera faces the direction in which the first imaging range cannot be captured, it is possible to generate and display the second display image by using the second clipped video image clipped from the rear video image. In this way, it is possible to reduce the lack of the video image in the rearview checking range and allow the area around the vehicle to be appropriately checked.

### [Second Embodiment]

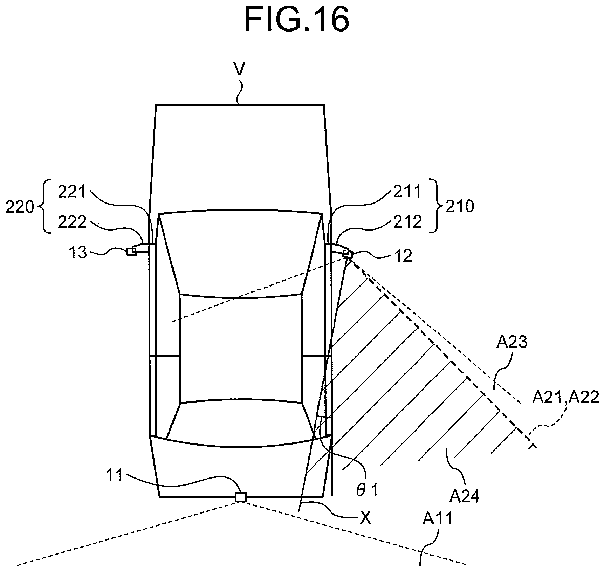

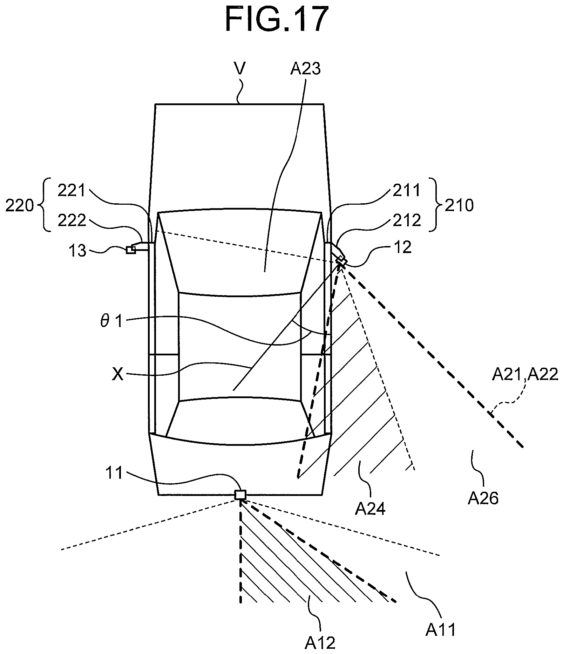

The display control system 1 according to the embodiments will be described with reference to FIG. 16 to FIG. 21. FIG. 16 is a schematic diagram illustrating the movable parts and the cameras of the vehicle on which the display control system according to a second embodiment is mounted. FIG. 17 is a schematic diagram illustrating the movable parts and the cameras of the vehicle on which the display control system according to the second embodiment is mounted. The basic configuration of the display control system 1 is the same as that of the display control system 1 according to the first embodiment. In a description below, components having the same function as those of the display control system 1 are assigned the same or the corresponding reference numerals and descriptions of overlapped portions will be omitted. The display control system 1 is different from that according to the first embodiment in that the processes performed in the display controller 45 included in the display control device 40 are different.

In the embodiment, a description will be given of a displaying process performed on the right side monitor 32 in a case where the right supporting portion 212 is operated with respect to the right door 211 when the right door 211 is in a fully closed state.

The displaying process performed on the right side monitor 32 in a case where the right movable part 210 is in the reference state is the same as that described in the first embodiment with reference to FIG. 7.

A state in which the right supporting portion 212 is closed at an angle of 10° with respect to the right door 211 will be described with reference to FIG. 16. In FIG. 16, the optical axis X of the right side camera 12 is rotated clockwise with respect to the optical axis X at the reference state of the right movable part 210 illustrated in FIG. 7. The effective view angle A23 is rotated clockwise with respect to the first imaging range A22. The effective view angle A23 includes the entire range of the first imaging range A22. At Step S11, the controller 41 calculates the first angle θ1 as -10° based on the operation information acquired by the detecting unit 43. Then, the controller 41 determines that the direction of the right side camera 12 in a case where the first angle θ1 is -10° is the direction in which the first imaging range A22 can be captured (Yes at Step S11). At Step S12, the controller 41 allows the display controller 45 to generate, as the second display image 100, the first clipped video image 101 that is obtained from the right rear video image by clipping the first clipping range A24 that is the entire range of the first imaging range A22. Then, the controller 41 allows the display controller 45 to display the second display image 100 on the right side monitor 32. The second display image 100 is the same as that illustrated in FIG. 9.

A state in which the right supporting portion 212 is closed at an angle of 40° with respect to the right door 211 will be described with reference to FIG. 17. In FIG. 17, the optical axis X of the right side camera 12 is rotated clockwise with respect to the optical axis X illustrated in FIG. 16. The effective view angle A23 is rotated clockwise with respect to the first imaging range A22. The effective view angle A23 is overlapped with a part of the first imaging range A22. In other words, the first imaging range A22 includes the remaining part A26 that is not overlapped with the effective view angle A23. At Step S11, the controller 41 calculates the first angle θ1 as -40° based on the operation information acquired by the detecting unit 43. Then, the controller 41 determines that the direction of the right side camera 12 in a case where the first angle θ1 is -40° is the direction in which the first imaging range A22 cannot be captured (No at Step S11). At Step S13, The controller 41 allows the display controller 45 to generate the second display image 100 from at least one of the right rear video image and the rear video image and display the generated second display image on the right side monitor 32.

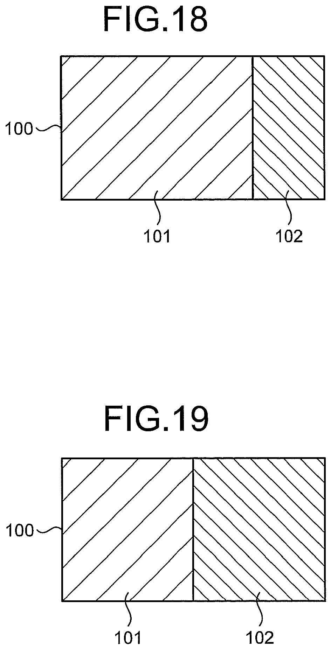

More specifically, at Step S13, the controller 41 allows the display controller 45 to generate the second display image 100 by combining the first clipped video image 101, which is obtained from the right rear video image by clipping the first clipping range A24 that is overlapped with a part of the first imaging range A22, and the second clipped video image 102, which is obtained from the rear video image by clipping the second clipping range A12 that is the range overlapped with the remaining part A26 in the first imaging range A22. The first clipping range A24 is the maximum range corresponding to the range overlapped with the first imaging range A22. The controller 41 allows the display controller 45 to display the second display image 100 illustrated in FIG. 18 on the right side monitor 32. FIG. 18 is a diagram illustrating an example of a video image generated in the display control system according to the second embodiment.

The second display image 100 illustrated in FIG. 18 is configured by the first clipped video image 101 and the second clipped video image 102. The area of the first clipped video image 101 is greater than the area of the second clipped video image 102.

Alternatively, the controller 41 may also allow the display controller 45 to generate the second display image 100 by combining the first clipped video image 101, which is obtained from the right rear video image by clipping the first clipping range A24 that is overlapped with the area of the left half of the first imaging range A22, and the second clipped video image 102, which is obtained from the rear video image by clipping the second clipping range A12 that is the range overlapped with the remaining part A26 in the first imaging range A22. The controller 41 allows the display controller 45 to display the second display image 100 illustrated in FIG. 19 on the right side monitor 32. FIG. 19 is a diagram illustrating another example of the video image generated in the display control system according to the second embodiment.

The second display image 100 illustrated in FIG. 19 is configured by the first clipped video image 101 and the second clipped video image 102. The area of the first clipped video image 101 is the same as the area of the second clipped video image 102.

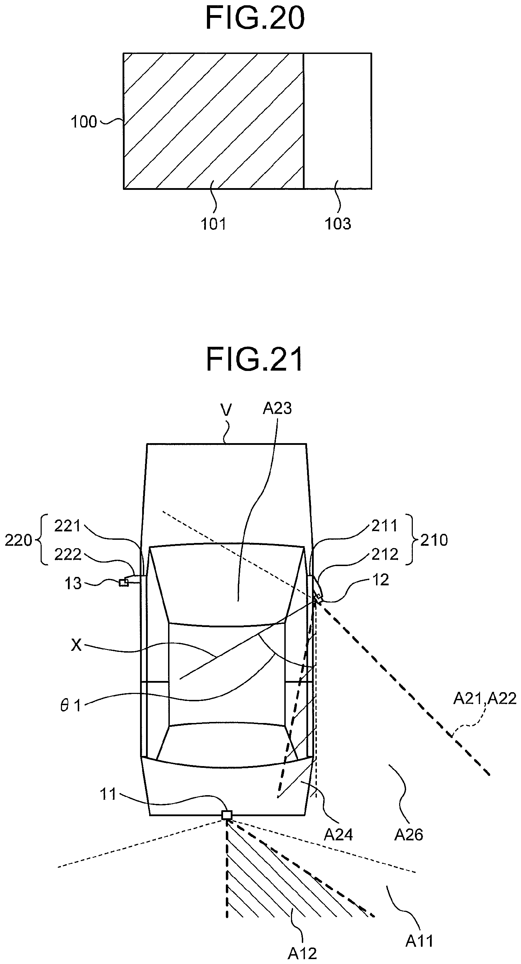

Alternatively, the controller 41 may also allow the display controller 45 to generate the second display image 100 by combining the first clipped video image 101, which is obtained from the right rear video image by clipping the first clipping range A24 that is overlapped with a part of the first imaging range A22, and the monochrome video image 103 which corresponds to the remaining part A26 in the first imaging range A22. It is preferable that the first clipping range A24 be the maximum range corresponding to the range overlapped with the first imaging range A22. The controller 41 allows the display controller 45 to display the second display image 100 illustrated in FIG. 20 on the right side monitor 32. FIG. 20 is a diagram illustrating another example of the video image generated in the display control system according to the second embodiment.

The second display image 100 illustrated in FIG. 20 is configured by the first clipped video image 101 and the monochrome video image 103. The area of the first clipped video image 101 is greater than the area of the monochrome video image 103.

Alternatively, the controller 41 may also allow the display controller 45 to generate, as the second display image 100, the second clipped video image 102 that is obtained from the rear video image by clipping the second clipping range A12 that is the range overlapped with the first imaging range A22. It is preferable that the second clipping range A12 be the maximum range corresponding to the range overlapped with the first imaging range A22. The controller 41 may also allow the display controller 45 to display the second display image 100 illustrated in FIG. 15 on the right side monitor 32.

A state in which the right supporting portion 212 is closed at an angle of 60° with respect to the right door 211 will be described with reference to FIG. 21. FIG. 21 is a schematic diagram illustrating the movable parts and the cameras of the vehicle on which the display control system according to the second embodiment is mounted. In FIG. 21, the optical axis X of the right side camera 12 is rotated clockwise with respect to the optical axis X illustrated in FIG. 17. The optical axis X is extended toward the vehicle interior. The effective view angle A23 is not overlapped with the most part of the first imaging range A22. At Step S11, the controller 41 calculates the first angle θ1 as -60° based on the operation information acquired by the detecting unit 43. Then, the controller 41 determines that the direction of the right side camera 12 in a case where the first angle θ1 is -60° is the direction in which the first imaging range A22 cannot be captured (No at Step S11). At Step S13, the controller 41 allows the display controller 45 to generate the second display image 100 from the rear video image. The controller 41 allows the display controller 45 to display the second display image 100 illustrated in FIG. 15 on the right side monitor 32.

In this way, the display control system 1 generates the second display image 100 in accordance with the operation status of the movable part 200 and displays the generated second display image on the right side monitor 32.

As described above, even when the right door 211 or the left door 221 is in a fully closed state and, furthermore, the right supporting portion 212 or the left supporting portion 222 is operated with respect to the right door 211 or the left door 221 respectively, the embodiment can generate the appropriate second display image and display the generated second display image on the side monitor. In this way, the embodiment can generate the appropriate second display image in accordance with the operation status of the movable part 200 and display the generated second display image on the side monitor.

### [Third Embodiment]

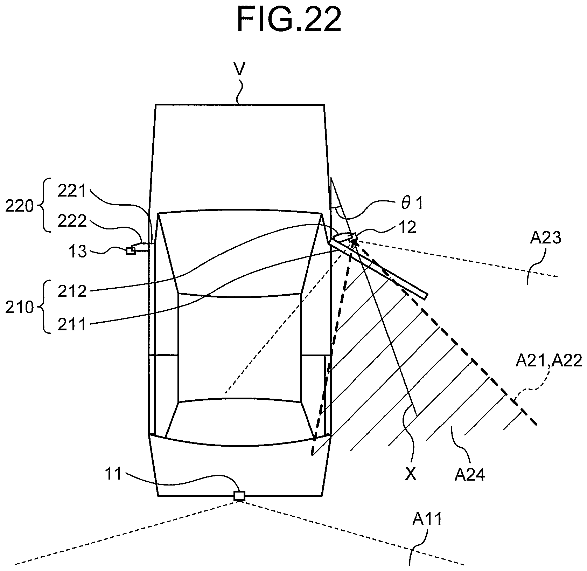

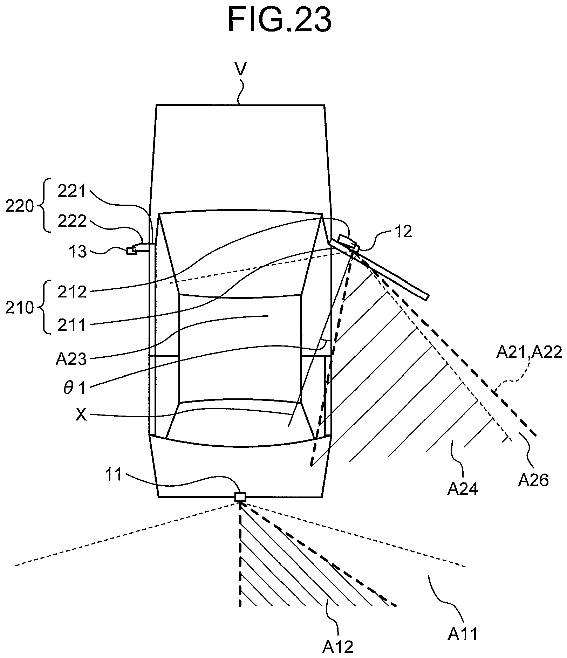

The display control system 1 according to the embodiment will be described with reference to FIG. 22 and FIG. 23. FIG. 22 is a schematic diagram illustrating the movable parts and the cameras of the vehicle on which the display control system according to the second embodiment is mounted. FIG. 23 is a schematic diagram illustrating the movable parts and the cameras of the vehicle on which the display control system according to the second embodiment is mounted. The display control system 1 is different from that described in the first embodiment in that the processes performed by the display controller 45 in the display control device 40 are different.

In the embodiment, a description will be given of a displaying process performed on the right side monitor 32 in a case where the right supporting portion 212 is operated with respect to the right door 211 when the right door 211 is opened at an angle of 60° with respect to the vehicle V.

A state in which the right supporting portion 212 is closed at an angle of 40° with respect to the right door 211 while the right door 211 is in the opened state at an angle of 60° with respect to the vehicle V will be described with reference to FIG. 22. In FIG. 22, the optical axis X of the right side camera 12 is rotated, counterclockwise, with respect to the optical axis X in the reference state in the right movable part 210 illustrated in FIG. 7. In the effective view angle A23, the range closer to the vehicle V than the right door 211 is captured through the side glass G. The effective view angle A23 is rotated counterclockwise with respect to the first imaging range A22. The effective view angle A23 includes the entire range of the first imaging range A22. At Step S11, the controller 41 calculates the first angle θ1 as 20° based on the operation information acquired by the detecting unit 43. Then, the controller 41 determines that the direction of the right side camera 12 in a case where the first angle θ1 is 20° is the direction in which the first imaging range A22 can be captured (Yes at Step S11). At Step S12, the controller 41 allows the display controller 45 to generate, as the second display image 100, the first clipped video image 101 that is obtained from the right rear video image by clipping the first clipping ran0ge A24 that is the entire range of the first imaging range A22. Then, the controller 41 allows the display controller 45 to display the second display image 100 illustrated in FIG. 9 on the right side monitor 32.

A state in which the right supporting portion 212 is closed at an angle of 80° with respect to the right door 211 while the right door 211 is in an opened state at an angle of 60° with respect to the vehicle V will be described with reference to FIG. 23. In FIG. 23, the optical axis X of the right side camera 12 is rotated clockwise with respect to the optical axis X illustrated in FIG. 22. The effective view angle A23 is rotated clockwise with respect to the first imaging range A22. In the effective view angle A23, the range closer to the vehicle V than the right door 211 is captured through the side glass G. The effective view angle A23 is overlapped with a part of the first imaging range A22. In other words, the first imaging range A22 includes the remaining part A26 that is not overlapped with the effective view angle A23. At Step S11, the controller 41 calculates the first angle θ1 as - 20° based on the operation information acquired by the detecting unit 43. Then, the controller 41 determines that the direction of the right side camera 12 in a case where the first angle θ1 is -20° is the direction in which the first imaging range A22 cannot to be captured (No at Step S11). At Step S13, the controller 41 allows the display controller 45 to generate the second display image 100 from at least one of the right rear video image and the rear video image and display the generated second display image on the right side monitor 32.

A specific display method may be performed by using the same display method used in the second embodiment illustrated in FIG. 17. The controller 41 allows the display controller 45 to display the second display image 100 illustrated in FIG. 18 on the right side monitor 32. Alternatively, the controller 41 may also allow the display controller 45 to display the second display image 100 illustrated in FIG. 19 on the right side monitor 32. Alternatively, the controller 41 may also allow the display controller 45 to display the second display image 100 illustrated in FIG. 20 on the right side monitor 32. Alternatively, the controller 41 may also allow the display controller 45 to display the second display image 100 illustrated in FIG. 15 on the right side monitor 32.

As described above, even when the right door 211 or the left door 221 is operated and, furthermore, the right supporting portion 212 or the left supporting portion 222 is operated with respect to the right door 211 or the left door 221 respectively, the embodiment can generate the appropriate second display image and display the generated second display image on the side monitor. In this way, the embodiment can generate the appropriate second display image in accordance with the operation status of the movable part 200 and display the generated video image on the side monitor.

The display control system 1 according to the present invention has been described. However, the present invention may be carried out in various different modes in addition to the above-described embodiments.

Each of the components included in the display control system 1 illustrated in the drawings are only for conceptually illustrating functions thereof and are not always physically configured as illustrated in the drawings. In other words, the specific shape of a separate or integrated device is not limited to the drawings. Specifically, all or part of the device can be configured by functionally or physically separating or integrating any of the units depending on various loads or use conditions.

The configuration of the display control system 1 is implemented by a program that is loaded as software into a memory. In the embodiment, the configuration has been described as functional blocks implemented by association among the sets of hardware or software. In other words, the functional blocks may be implemented with only hardware or only software or in various forms using combinations of hardware and software.

The above-described components include those easily assumable by those skilled in the art and those substantially the same as the above-described components. Furthermore, the above-described components may be combined as appropriate. Furthermore, it is possible to make various types of omission, replacement or change among the components within the scope of the present invention.

When the display control unit 45 generates the second display image by combining the first clipped video image clipped from the side rear video image and the second clipped video image clipped from the rear video image, the display control unit 45 may also draw a line on a boundary or change brightness or luminance so as to distinguish between the first clipped video image and the second clipped video image. Consequently, a driver can easily recognize the first clipped video image and the second clipped video image distinguishably.

The operation of the right supporting portion 212 or the left supporting portion 222 is not limited to the configuration in which the supporting portion supports the side camera so as to be capable of being folded but may also be opened or closed by sliding in the vehicle width direction or in the vertical direction. In this case, the direction of the optical axis of the side camera is changed in accordance with an operation amount of the movable part for the sliding from the reference state. If the operation amount of the movable part is within a predetermined range, the side camera faces the direction in which the first imaging range can be captured. The predetermined range is adjusted at the time of, for example, setup of the display control device 40 and is previously stored.

Based on the area that is overlapped range between the side rear video image captured by the side camera and the first imaging range, the display controller 45 may also determine whether the direction of the side camera is the direction in which the first imaging range can be captured. For example, if the area of overlapped range is equal to or greater than a predetermined value, the display controller 45 may determine that the direction of the side camera is the direction in which the first imaging range A22 can be captured. For example, if the area of the overlapped range is less than the predetermined value, the display controller 45 may determine that the direction of the side camera is the direction in which the first imaging range A22 cannot be captured. Consequently, even when the display controller 45 cannot acquire the operation amount of the movable part, the display controller 45 can determine the direction of the side camera based on the area of the overlapped range between the side rear video image and the first imaging range. In this way, even when the display controller 45 cannot acquire the operation amount of the movable part, the display controller 45 can generate the appropriate second display image in accordance with the operation status of the movable part 200 and display the generated second display image on the side monitor.

Alternatively, the display controller 45 may also perform image processing for detecting the overlapped area between the side rear video image and the rear video image, calculate the direction of the side camera, and determine whether the direction of the side camera is the direction in which the first imaging range A22 can be captured. Consequently, even when the display controller 45 cannot acquire the operation amount of the movable part, the display controller 45 can determine the direction of the side camera based on the image processing for detecting the overlapped area between the side rear video image and the rear video image. In this way, even when the display controller 45 cannot acquire the operation amount of the movable part, the display controller 45 can generate the appropriate second display image in accordance with the operation status of the movable part 200 and display the generated second display image on the side monitor.

If the direction of the side camera is the direction in which the side camera captures the video image through the side glass G, the display controller 45 may also detect, by performing image analysis on the side rear video image, whether reflection is present in the side glass G and does not use the side rear video image if the reflection has been detected. Consequently, it is possible to display the appropriate video image on the side monitor.

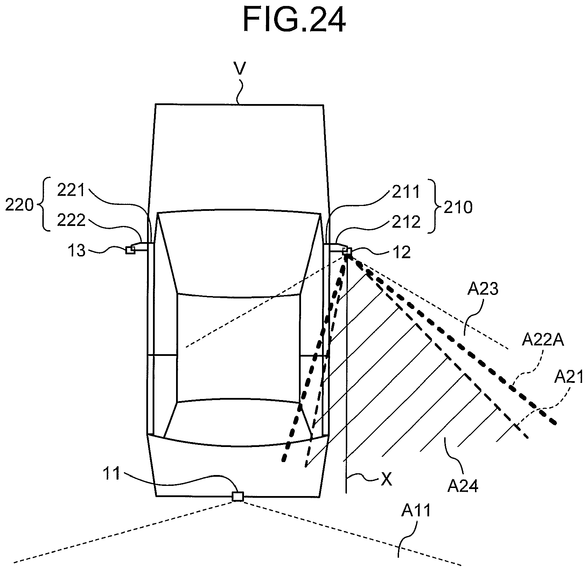

It has been described in which the first imaging range A22 is the same as the rearview checking range A21. However, the first imaging range A22 is not limited to this. For example, as illustrated in FIG. 24, the first imaging range A22A may also be a range greater than the rearview checking range A21. FIG. 24 is a schematic diagram illustrating another example of the movable part of the vehicle on which the display control system is mounted and the camera. With this configuration, it is possible to generate the second display image without distortion due to using an end portion of the video image captured by the side camera and display the generated second display image on the side monitor.

## Claims

1. An on-vehicle display control device (40) comprising:
a video image data acquiring unit (42) configured to acquire side rear video image data captured by a side camera (12, 13) provided in a movable part (200, 210, 220) that is configured to support the side camera (12, 13) so as to be capable of being folded with respect to a door of a vehicle and configured to capture a rear view of the vehicle and to acquire rear video image data captured by a rear camera (11) provided at a rear of the vehicle and configured to capture the rear view of the vehicle; and
a display controller (45) configured to display, on a side monitor (32, 33), the side rear video image data and the rear video image data, **characterized in that**
the display controller (45) is further configured to;
when the movable part (200, 210, 220) is in a reference state in which a direction of an optical axis (X) of the side camera (12, 13) is a direction in which a first imaging range (A22) predetermined in the side rear video image data captured by the side camera (12, 13) can be entirely captured, clip the first imaging range (A22) and display the clipped side rear view image data on the side monitor (32, 33);
when the movable part (200, 210, 220) is in a first state which is different from the reference state and in which the direction of the optical axis (X) of the side camera (12, 13) is a direction in which the first imaging range (A22) can be entirely captured, clip the first imaging range (A22) and display the clipped side rear view image data on the side monitor (32, 33); and
when the movable part (200, 210, 220) is in a second state which is different from the reference state and in which the direction of the optical axis (X) of the side camera (12, 13) is a direction in which a part of the first imaging range (A22) cannot be captured, generate a combined display image data by combining a first clipped video image (101) which is obtained from the side rear video image data by clipping a first clipping range (A24) that is overlapped with a part of the first imaging range (A22) and a second clipped video image (102) which is obtained from the rear video image data by clipping a second clipping range (A12) that is overlapped with a remaining part (A25) as a part which cannot be captured by the side camera (12, 13) in the first imaging range (A22), and display the combined display image data on the side monitor (32, 33),
wherein the reference state is a state in which the door of the vehicle is in a fully closed state with respect to the vehicle and the movable part is in a fully opened state with respect to the door of the vehicle.

2. The on-vehicle display control device (40) according to claim 1, wherein, when the movable part (200, 210, 220) is operated and the side camera (12, 13) faces the direction in which the first imaging range (A22) cannot be entirely captured, the display controller (45) is further configured to display, on the side monitor (32, 33), the first clipped video image (101) from the side camera (12, 13) and the second video image (102) from the rear camera (11) instead of the first clipped video image (101).

3. The on-vehicle display control device (40) according to any one of claims 1 to 2, further comprising a detecting unit (43) configured to acquire operation information including an operation amount of the movable part (200, 210, 220), wherein
the display controller (45) is further configured to determine a facing direction of the side camera (12, 13) based on the operation information acquired by the detecting unit(43).

4. The on-vehicle display control device (40) according to claim 3, wherein
the detecting unit (43) is further configured to detect the operation amount of the side door (211, 221) or the camera supporting portion (212, 222).

5. An on-vehicle display control system (1) comprising:
the on-vehicle display control device (40) according to any one of claims 1 to 4; and
at least one of the movable part (200, 210, 220), the side camera (12, 13), the rear camera (11), and the side monitor (32, 33).

6. An on-vehicle display control method comprising:
a video image data acquiring step of acquiring side rear video image data captured by a side camera (12, 13) provided in a movable part (200, 210, 220) that is configured to support the side camera (12, 13) so as to be capable of being folded with respect to a door of a vehicle and configured to capture a rear view of the vehicle and acquiring rear video image data captured by a rear camera (11) provided at a rear of the vehicle and configured to capture the rear view of the vehicle; and
a display control step of displaying, on a side monitor (32, 33), the side rear video image data and the rear video image data, **characterized in that**
further comprising:
when the movable part (200, 210, 220) is in a reference state in which a direction of an optical axis (X) of the side camera (12, 13) is a direction in which a first imaging range (A22) predetermined in the side rear video image data captured by the side camera (12, 13) can be entirely captured, clipping the side rear video image data so as to include the first imaging range (A22) and displaying the clipped side rear view image data on the side monitor (32, 33);
when the movable part (200, 210, 220) is in a first state which is different from the reference state and in which the direction of the optical axis (X) of the side camera (12, 13) is the direction in which the first imaging range (A22) predetermined in the side rear video image data captured by the side camera (12, 13) can be entirely captured, clipping the first imaging range (A22) and displaying the clipped side rear view image data on the side monitor (32, 33); and
when the movable part (200, 210, 220) is in a second state which is different from the reference state and in which the direction of the optical axis (X) of the side camera (12, 13) is a direction in which a part of the first imaging range (A22) cannot be captured, generating a combined display image data by combining a first clipped video image (101) which is obtained from the side rear video image data by clipping a first clipping range (A24) that is overlapped with a part of the first imaging range (A22) and a second clipped video image (102) which is obtained from the rear video image data by clipping a second clipping range (A12) that is overlapped with a remaining part (A25) as a part which cannot be captured by the side camera (12, 13) in the first imaging range (A22), and displaying the combined display image data on the side monitor (32, 33),
wherein the reference state is a state in which the door of the vehicle is in a fully closed state with respect to the vehicle and the movable part is in a fully opened state with respect to the door of the vehicle.

7. A non-transitory storage medium that stores a program comprising instructions to cause the device of claim 1 to execute the steps of the method of claim 6.

## Patentansprüche

1. An einem Fahrzeug befindliche Steuervorrichtung (40), die Folgendes aufweist:
eine Videobilddatenerfassungseinheit (42), die konfiguriert ist, um Seiten-Rückwärts-Videobilddaten zu erfassen, die von einer Seitenkamera (12, 13) aufgenommen werden, die in einem bewegbaren Teil (200, 210, 220) vorgesehen ist, der konfiguriert ist, um die Seitenkamera (12, 13) zu tragen, so dass diese bezüglich einer Tür eines Fahrzeugs geschwenkt werden kann, und konfiguriert ist, um einen Rückwärtsblick des Fahrzeugs aufzunehmen und Rückwärts-Videobilddaten zu erfassen, die von einer Rückwärts- bzw. Rückblickkamera (11) aufgenommen werden, die an einem hinteren Teil des Fahrzeugs vorgesehen ist und konfiguriert ist, um den Rückwärtsblick des Fahrzeugs aufzunehmen; und
eine Anzeigesteuervorrichtung (45), die konfiguriert ist, um auf einem Seitenmonitor (32, 33), die Seiten-Rückwärts-Videobilddaten und die Rückwärts-Videobilddaten anzuzeigen, **dadurch gekennzeichnet, dass** die Anzeigesteuervorrichtung (45) weiter konfiguriert ist, um wenn der bewegbare Teil (200, 210, 220) in einem Referenzzustand ist, in welchem eine Richtung einer optischen Achse (X) der Seitenkamera (12, 13) eine Richtung ist, in welcher ein erster Bildaufnahme- bzw. Abbildungsbereich (A22), der in den Seiten-Rückwärts-Videobilddaten vorbestimmt ist, die von der Seitenkamera (12, 13) aufgenommen werden, vollständig aufgenommen werden kann, den ersten Bildaufnahmebereich (A22) abzuschneiden und die abgeschnittenen Seiten-Rückwärts-Blickbilddaten auf dem Seitenmonitor (32, 33) anzuzeigen;
wenn der bewegbare Teil (200, 210, 220) in einem ersten Zustand ist, der sich von dem Referenzzustand unterscheidet, und in welchem die Richtung der optischen Achse (X) der Seitenkamera (12, 13) eine Richtung ist, in welcher der erste Abbildungsbereich (A22) vollständig aufgenommen werden kann, den ersten Abbildungsbereich (A22) abzuschneiden und die abgeschnittenen Seiten-Rückwärts-Blickbilddaten auf dem Seitenmonitor (32, 33) anzuzeigen; und
wenn der bewegbare Teil (200, 210, 220) in einem zweiten Zustand ist, der sich von dem Referenzzustand unterscheidet, und in welchem die Richtung der optischen Achse (X) der Seitenkamera (12, 13) eine Richtung ist, in welcher ein Teil des ersten Abbildungsbereiches (A22) nicht aufgenommen werden kann, kombinierte Anzeigebilddaten zu erzeugen durch Kombinieren eines ersten abgeschnittenen Videobildes (101), welches aus den Seiten-Rückwärts-Videobilddaten, durch Abschneiden eines ersten Clipping- bzw. Abschneidebereiches (A24) erhalten wurde, der mit einem Teil des ersten Abbildungsbereiches (A22) überlappt, und eines zweiten abgeschnittenen Videobildes (102), welches aus den Rückwärts-Videobilddaten durch Abschneiden eines zweiten Clipping- bzw. Abschneidebereiches (A12) erhalten wurde, der mit einem restlichen Teil (A25) überlappt, und zwar als ein Teil, der durch die Seitenkamera (12, 13) in dem ersten Abbildungsbereich (A22) nicht aufgenommen werden kann, und die kombinierten Anzeigebilddaten auf dem Seitenmonitor (32, 33) anzuzeigen,
wobei der Referenzzustand ein Zustand ist, in dem die Tür des Fahrzeugs in einem vollständig geschlossenen Zustand bezüglich des Fahrzeuges ist und der bewegbare Teil in einem vollständig offenen Zustand bezüglich der Tür des Fahrzeugs ist.

2. An einem Fahrzeug befindliche Steuervorrichtung (40) nach Anspruch 1, wobei, wenn der bewegbare Teil (200, 210, 220) betätigt wird und die Seitenkamera (12, 13) in die Richtung weist, in welcher der erste Abbildungsbereich (A22) nicht vollständig aufgenommen werden kann, die Anzeigesteuervorrichtung (45) weiter konfiguriert ist, um auf dem Seitenmonitor (32, 33) das erste abgeschnittene Videobild (101) von der Seitenkamera (12, 13) und das zweite Videobild (102) von der Rückwärts- bzw. Rückblickkamera (11) anstelle des ersten abgeschnittenen Videobildes (101) anzuzeigen.

3. An einem Fahrzeug befindliche Steuervorrichtung (40) nach einem der Ansprüche 1 bis 2, die weiter eine Detektionseinheit (43) aufweist, die konfiguriert ist, um Betriebs- bzw. Betätigungsinformation zu erfassen, und zwar einschließlich einer Betätigungsgröße des bewegbaren Teils (200, 210, 220), wobei
die Anzeigesteuervorrichtung (45) weiter konfiguriert ist, um eine Ausrichtung der Seitenkamera (12, 13) basierend auf der Betätigungsinformation zu bestimmen, die von der Detektionseinheit (43) erfasst wurde.

4. An einem Fahrzeug befindliche Steuervorrichtung (40) nach Anspruch 3, wobei
die Detektionseinheit (43) weiter konfiguriert ist, um die Betätigungsgröße der Seitentür (211, 221) oder des Kameratragteils (212, 222) zu detektieren.

5. An einem Fahrzeug befindliches Steuersystem (1), welches Folgendes aufweist:
die an einem Fahrzeug befindliche Anzeigesteuervorrichtung (40) nach einem der Ansprüche 1 bis 4; und
den bewegbaren Teil (200, 210, 220) und/oder die Seitenkamera (12, 13) und/oder die Rückwärts- bzw. Rückblickkamera (11) und/oder den Seitenmonitor (32, 33).

6. Steuerverfahren für eine an einem Fahrzeug befindliche Anzeige, welches Folgendes aufweist:
einen Videobilddatenerfassungsschritt des Erfassens von Seiten-Rückwärts-Videobilddaten, die von einer Seitenkamera (12, 13) aufgenommen wurden, die in einem bewegbaren Teil (200, 210, 220) vorgesehen ist, der konfiguriert ist, um die Seitenkamera (12, 13) zu tragen, so dass diese bezüglich einer Tür eines Fahrzeugs geschwenkt werden kann, und konfiguriert ist, um einen Rückwärtsblick des Fahrzeugs aufzunehmen und Rückwärts-Videobilddaten zu erfassen, die von einer Rückwärts- bzw. Rückblickkamera (11) aufgenommen wurden, die an einem hinteren Teil des Fahrzeugs vorgesehen ist und konfiguriert ist, um den Rückwärtsblick des Fahrzeugs aufzunehmen; und
einen Anzeigesteuerschritt des Anzeigens der Seiten-Rückwärts-Videobilddaten und der Rückwärts-Videobilddaten auf einem Seitenmonitor (32, 33), **dadurch gekennzeichnet, dass**
es weiter Folgendes aufweist:
wenn der bewegbare Teil (200, 210, 220) in einem Referenzzustand ist, in welchem eine Richtung einer optischen Achse (X) der Seitenkamera (12, 13) eine Richtung ist, in der ein erster Bildaufnahme- bzw. Abbildungsbereich (A22), der in den Seiten-Rückwärts-Videobilddaten vorbestimmt ist, die von der Seitenkamera (12, 13) aufgenommen werden, vollständig aufgenommen werden kann, Abschneiden der Seiten-Rückwärts-Videobilddaten, um den ersten Abbildungsbereich (A22) einzuschließen und Anzeigen der abgeschnittenen Seiten-Rückwärts-Blickbilddaten auf dem Seitenmonitor (32, 33);
wenn der bewegbare Teil (200, 210, 220) in einem ersten Zustand ist, der sich von dem Referenzzustand unterscheidet, und in welchem die Richtung der optischen Achse (X) der Seitenkamera (12, 13) die Richtung ist, in welcher der erste Abbildungsbereich (A22), der in den Seiten-Rückwärtsvideobilddaten vorbestimmt ist, die von der Seitenkamera (12, 13) aufgenommen werden, vollständig aufgenommen werden kann, Abschneiden des ersten Abbildungsbereiches (A22) und Anzeigen der abgeschnittenen Seiten-Rückwärts-Blickbilddaten auf dem Seitenmonitor (32, 33); und
wenn der bewegbare Teil (200, 210, 220) in einem zweiten Zustand ist, der sich von dem Referenzzustand unterscheidet, und in welchem die Richtung der optischen Achse (X) der Seitenkamera (12, 13) eine Richtung ist, in der ein Teil des ersten Abbildungsbereiches (A22) nicht aufgenommen werden kann, Erzeugen von kombinierten Anzeigebilddaten durch Kombinieren eines ersten abgeschnittenen Videobildes (101), welches aus den Seiten-Rückwärts-Videobilddaten erhalten wird durch Abschneiden eines ersten Clipping- bzw. Abschneidebereiches (A24), der mit einem Teil des ersten Abbildungsbereiches (A22) überlappt, und eines zweiten abgeschnittenen Videobildes (102), welches aus den Rückwärts-Videobilddaten erhalten wird durch Abschneiden eines zweiten Clipping- bzw. Abschneidebereiches (A12), der mit einem restlichen Teil (A25) überlappt, und zwar als ein Teil, der von der Seitenkamera (12, 13) in dem ersten Abbildungsbereich (A22) nicht aufgenommen werden kann, und Anzeigen der kombinierten Anzeigebilddaten auf dem Seitenmonitor (32, 33), wobei der Referenzzustand ein Zustand ist, in dem die Tür des Fahrzeugs in einem vollständig geschlossenen Zustand bezüglich des Fahrzeuges ist und der bewegbare Teil in einem vollständig offenen Zustand bezüglich der Tür des Fahrzeugs ist.

7. Nicht flüchtiges Speichermedium, welches ein Programm speichert, welches Instruktionen aufweist, um die Vorrichtung nach Anspruch 1 zu veranlassen, die Schritte des Verfahrens nach Anspruch 6 auszuführen.

## Revendications

1. Dispositif de commande d'affichage embarqué dans un véhicule (40) comprenant :
une unité d'acquisition de données d'image vidéo (42) configurée pour acquérir des données d'image vidéo arrière latérale capturées par une caméra latérale (12, 13) prévue dans une partie mobile (200, 210, 220) qui est configurée pour supporter la caméra latérale (12, 13) de sorte à pouvoir être repliée par rapport à une porte d'un véhicule et configurée pour capturer un vue arrière du véhicule et pour acquérir des données d'image vidéo arrière capturées par une caméra arrière (11) prévue à l'arrière du véhicule et configurée pour capturer la vue arrière du véhicule ; et
un contrôleur d'affichage (45) configuré pour afficher, sur un écran latéral (32, 33), les données d'image vidéo arrière latérale et les données d'image vidéo arrière, **caractérisé en ce que**
le contrôleur d'affichage (45) est en outre configuré pour :
quand la partie mobile (200, 210, 220) est dans un état de référence dans lequel une direction d'un axe optique (X) de la caméra latérale (12, 13) est une direction dans laquelle une première plage d'imagerie (A22) prédéterminée dans les données d'image vidéo arrière latérale capturées par la caméra latérale (12, 13) peut être entièrement capturée, tronquer la première plage d'imagerie (A22) et afficher les données d'image de vue arrière latérale tronquée sur l'écran latéral (32, 33) ;
quand la partie mobile (200, 210, 220) est dans un premier état qui est différent de l'état de référence et dans lequel la direction de l'axe optique (X) de la caméra latérale (12, 13) est une direction dans laquelle la première plage d'imagerie (A22) peut être entièrement capturée, tronquer la première plage d'imagerie (A22) et afficher les données d'image de vue arrière latérale tronquée sur l'écran latéral (32, 33) ; et
quand la partie mobile (200, 210, 220) est dans un deuxième état qui est différent de l'état de référence et dans lequel la direction de l'axe optique (X) de la caméra latérale (12, 13) est une direction dans laquelle une partie de la première plage d'imagerie (A22) ne peut pas être capturée, générer des données d'image d'affichage combiné en combinant une première image vidéo tronquée (101) qui est obtenue à partir des données d'image de vue arrière latérale en tronquée une première plage de coupe (A24) qui est recouverte par une partie de la première plage d'imagerie (A22) et une deuxième image vidéo tronquée (102) qui est obtenue à partir des données d'image vidéo en tronquant une deuxième plage de coupe (A12) qui est recouverte par une partie restante (A25) en tant que partie qui ne peut pas être capturée par la caméra latérale (12, 13) dans la première plage d'imagerie (A22), et afficher les données d'image d'affichage combiné sur l'écran latéral (32, 33),
dans lequel l'état de référence est un état dans lequel la porte du véhicule est dans un état complètement fermé par rapport au véhicule et la partie mobile est dans un état complètement ouvert par rapport à la porte du véhicule.

2. Dispositif de commande d'affichage embarqué dans un véhicule (40) selon la revendication 1, dans lequel, quand la partie mobile (200, 210, 220) est actionnée et que la caméra latérale (12, 13) fait face à la direction dans laquelle la première plage d'imagerie (A22) ne peut pas être totalement capturée, le contrôleur d'affichage (45) est en outre configuré pour afficher, sur l'affichage latéral (32, 33), la première image vidéo tronquée (101) provenant de la caméra latérale (12, 13) et la deuxième image vidéo (102) provenant de la caméra arrière (11) au lieu de la première image vidéo tronquée (101).

3. Dispositif de commande d'affichage embarqué dans un véhicule (40) selon la revendication 1 ou 2, comprenant en outre une unité de détection (43) configurée pour acquérir des informations de fonctionnement comportant une quantité de fonctionnement de la partie mobile (200, 210, 220), dans lequel
le contrôleur d'affichage (45) est en outre configuré pour déterminer une direction de face de la caméra latérale (12, 13) sur la base des informations de fonctionnement acquises par l'unité de détection (43).

4. Dispositif de commande d'affichage embarqué dans un véhicule (40) selon la revendication 3, dans lequel
l'unité de détection (43) est en outre configurée pour détecter la quantité de fonctionnement de la porte latérale (211, 221) ou de la partie portant la caméra (212, 222).

5. Système de commande d'affichage embarqué dans un véhicule (1) comprenant :
le dispositif de commande d'affichage embarqué dans un véhicule (40) selon l'une quelconque des revendications 1 à 4 ; et
au moins un élément parmi la partie mobile (200, 210, 220), la caméra latérale (12, 13), la caméra arrière (11), et l'écran latéral (32, 33).

6. Procédé de commande d'affichage embarqué dans un véhicule comprenant :
une étape d'acquisition de données d'image vidéo d'acquisition de données d'image vidéo arrière latérale capturées par une caméra latérale (12, 13) prévue dans une partie mobile (200, 210, 220) qui est configurée pour supporter la caméra latérale (12, 13) de sorte à pouvoir être repliée par rapport à une porte d'un véhicule et configurée pour capturer une vue arrière du véhicule et pour acquérir des données d'image vidéo arrière capturées par une caméra arrière (11) prévue à l'arrière du véhicule et configurée pour capturer la vue arrière du véhicule ; et
une étape de commande d'affichage d'affichage, sur un écran latéral (32, 33), des données d'image vidéo arrière latérale et des données d'image vidéo arrière, **caractérisé en ce que**
il comprend en outre :
quand la partie mobile (200, 210, 220) est dans un état de référence dans lequel une direction d'un axe optique (X) de la caméra latérale (12, 13) est une direction dans laquelle une première plage d'imagerie (A22) prédéterminée dans les données d'image vidéo arrière latérale capturées par la caméra latérale (12, 13) peut être entièrement capturée, la coupe des données d'image vidéo arrière latérale de sorte à inclure la première plage d'imagerie (A22) et l'affichage des données d'image de vue arrière latérale tronquée sur l'écran latéral (32, 33) ;
quand la partie mobile (200, 210, 220) est dans un premier état qui est différent de l'état de référence et dans lequel la direction de l'axe optique (X) de la caméra latérale (12, 13) est la direction dans laquelle la première plage d'imagerie (A22) prédéterminée dans les données d'image vidéo arrière latérale capturées par la caméra latérale (12, 13) peut être entièrement capturée, la coupe de première plage d'imagerie (A22) et l'affichage des données d'image de vue arrière latérale tronquée sur l'écran latéral (32, 33) ; et
quand la partie mobile (200, 210, 220) est dans un deuxième état qui est différent de l'état de référence et dans lequel la direction de l'axe optique (X) de la caméra latérale (12, 13) est une direction dans laquelle une partie de la première plage d'imagerie (A22) ne peut pas être capturée, la génération de données d'image d'affichage combiné en combinant une première image vidéo tronquée (101) qui est obtenue à partir des données d'image vidéo de vue arrière latérale en tronquant une première plage de coupe (A24) qui est recouverte par une partie de la première plage d'imagerie (A22) et une deuxième image vidéo tronquée (102) qui est obtenue à partir des données d'image vidéo en tronquant une deuxième plage de coupe (A12) qui est recouverte par une partie restante (A25) en tant que partie qui ne peut pas être capturée par la caméra latérale (12, 13) dans la première plage d'imagerie (A22), et l'affichage des données d'image d'affichage combiné sur l'écran latéral (32, 33),
dans lequel l'état de référence est un état dans lequel la porte du véhicule est dans un état complètement fermé par rapport au véhicule et la partie mobile est dans un état complètement ouvert par rapport à la porte du véhicule.

7. Support de stockage non transitoire qui stocke un programme comprenant des instructions pour forcer le dispositif de la revendication 1 pour exécuter les étapes du procédé de la revendication 6.
